# EUROPEAN PATENT APPLICATION

(11) **EP 2 371 321 A2**
(43) Date of publication of application: **05.10.2011**
(21) Application number: 11160786.7
(22) Date of filing: 01.04.2011
(51) Int. Cl.: A61C 13/273

(54) **Precision attachment lock apparatus and method of locking a dental prosthesis in mouth**

(30) Priority: 02.04.2010 TR 201002563
(71) Applicant: Kargi Saglik Hizmetleri Ve Ticaret Limited Sirketi, Bursa (TR)
(72) Inventor: Kargi, Rahmi, Bursa (TR)

(57) **Abstract**

The invention is the precision attachment lock apparatus for use in in-mouth removable (partial-metal) dental prosthesis with extra coronal application in the field of dentistry and having female moulded framework dental prosthesis apparatus (2) connected with the denture; and male moulded crown apparatus (3) connected with the implant or natural (fixed) tooth, and it comprises attachment apparatus (1), which forms the centre of the precision attachment lock apparatus (4), is connected between the framework dental prosthesis apparatus (2) and the crown apparatus (3), and comprises housing (1.4) having recession (1.21), protrusions (1.22), and bearing surface (1.41) at its outer surface and performing locking due to its form; framework dental prosthesis apparatus comprising attachment apparatus housing (2.3) having recession (2.31) and protrusions (2.32) equivalent to the outer surface form of the attachment apparatus (1) providing locking of the attachment apparatus (1); and lock member (3.3), which is formed equivalently to the housing (1.4) found on the attachment apparatus (1) and fits in the housing (1.4), and which has concave surfaces (3.31) on the crown apparatus (3) providing locking-in of at least two adjacent teeth by performing locking of the framework dental prosthesis apparatus (2) connected with the artificial teeth and the crown apparatus (3) connected with the fixed teeth.

## Description

### THE RELATED ART

The invention relates to precision attachment apparatus used in in-mouth removable (partial-metal) dental prosthesis in the field of dentistry.

The invention is the precision attachment lock apparatus for use in in-mouth removable (partial-metal) dental prosthesis with extra coronal application in the field of dentistry and having female moulded framework dental prosthesis apparatus connected with the denture; and male moulded crown apparatus connected with the implant or natural (fixed) tooth, and it comprises attachment apparatus, which forms the centre of the precision attachment lock apparatus, is connected between the framework dental prosthesis apparatus and the crown apparatus, and comprises housing having recession, protrusions, and bearing surface at its outer surface and performing locking due to its form; framework dental prosthesis apparatus comprising attachment apparatus housing having recession and protrusions equivalent to the outer surface form of the attachment apparatus providing locking of the attachment apparatus; and lock member, which is formed as matching with the housing found on the attachment apparatus and fits in the housing, and which has concave surfaces on the crown apparatus providing locking-in of at least two adjacent teeth by performing locking of the framework dental prosthesis apparatus connected with the artificial teeth and the crown apparatus connected with the fixed teeth.

### THE PRIOR ART

In-mouth removable dental prosthesis used in the field of dentistry are divided into two categories, which are: clasp systems and precision attachment systems. Nowadays, removable dental prosthesis generally mean that the patient can himself attach and remove the dental prosthesis which is made instead of his lacking teeth. This type of prosthesis has to be supported by the teeth remaining in the mouth and the soft tissue surrounding the teeth. Dental prosthesis are somewhat embedded into the soft tissues found in mouth as a result of the force that occurs during chewing, in other words, they move.

Removable dental prosthesis can be applied in cases ranging from single tooth deficiency (very rarely) to deficiency of all teeth. While they can be made on a metal infrastructure, they can also be made on polymethyl methacrylate (acrylic) which has the colour of gingival or they can be made as combination of metal and acrylic. Partial Removable Dental prosthesis; are prosthesis, which are made with the purpose of taking place of the lost teeth, which has metal body and is attached to present teeth via metal clasps (braces) or special precision attachments, by which artificial teeth are placed instead of the deficient teeth, and which is removable by the patient. Clasps are the metal parts surrounding the natural teeth which support the attachment of partial dental prosthesis.

Specially produced attachments called as precision attachments are; formed of two parts, which are placed at the crowns formed on support teeth and at the inner part of the removable dental prosthesis. In this way, when the dental prosthesis is placed in mouth, no metal piece is seen at the outer parts of teeth. They have various different types. Dentist decides which type of precision attachment would be used according to the dental prosthesis to be made.

In the clasp system, drawbacks are seen such as loss of aesthetics, loss of activation in time via usage, and fragility. Besides these, while the clasp systems are attached or removed, they may harm the soft tissue in the mouth and cause injuries. In case of breakage, since they would require a certain period of restoration, patients would have to live without dental prosthesis for a while.

Moreover, unavailability of repairing in case of breakage of the claw parts, which prevent the dental prosthesis from being embedded into soft tissues together with the clasp, leads to significant problems.

On the other hand, various attachments are present in precision attachment removable dental prosthesis systems. While the attachments vary according to the system, their costs are quite high. Moreover, laboratory applications of the precision attachment removable dental prosthesis systems used in the prior art are quite risky and difficult.

In case of problems which could be encountered in applications of the systems, the availability of restoration or eliminating the problems in clinic almost do not exist.

Nowadays, extra-coronally applied precision attachment apparatus are known. One of these applications relates to the extra coronal and its production method disclosed in the application with no EP1709939. In this apparatus, female mould in contact with the artificial denture and male mould in contact with the implant or natural teeth are found. It relates to complete contact of the male mould having longitudinal frame or longitudinal groove which corresponds to the female mould having longitudinal frame or longitudinal groove.

As a result, the need for precision attachment apparatus eliminating the drawbacks of the prior art, and the inadequacy of the present solutions have necessitated improvement in the related technical field.

### PURPOSE OF THE INVENTION

From the known status of the art, the purpose of the invention is to develop lock precision attachment apparatus, which are used in in-mouth removable (partial-metal) dental prosthesis devices in the field of dentistry, and which provides facility for the teeth, on which it would be applied, to be made in appropriate dimensions with their sizes.

Purpose of the invention is, while activating the precision attachment lock apparatus , lips have an elastic expansion to prevent abrasions in the interior surfaces of framework dental prosthesis apparatus and crown apparatus.

Another purpose of the invention is to develop lock precision attachment apparatus, which do not cause loss of aesthetics on its surfaces facing the palate and the tongue.

Another purpose of the invention is to develop lock precision attachment apparatus, which do not disturb the tongue and eliminate the risk of breakage.

Another purpose of the invention is to develop lock precision attachment apparatus, which has the structure (resilience) that could neutralize the load to be transmitted to the support tooth together with the chewing force in both quite stabile (immobile, rigid) and free end cases.

Another purpose of the invention is to develop lock precision attachment apparatus comprising the lock system, which would prevent spontaneous removal during usage.

Another purpose of the invention is to develop an economic lock precision attachment apparatus.

Another purpose of the invention is to develop lock precision attachment apparatus, which can be fixed at the teeth without having difficulty of application in laboratory or clinic.

Another purpose of the invention is to develop lock precision attachment apparatus, which does not depend completely on the knowledge and skills of the technician and can be easily applied via the developed apparatus.

Another purpose of the invention is to develop lock precision attachment apparatus, which do not disturb the patient while using.

Another purpose of the invention is to develop lock precision attachment apparatus, which has ease of application, can be removed and cleaned, and does not have any negative impact on mouth hygiene.

One of the most important purposes of the invention is to develop lock precision attachment apparatus, which can be safely applied in single-side free end cases, provides significant ease of application via its auxiliary apparatus, which is quite economic regarding its equivalents, completely aesthetic, and long-lasting.

In order to achieve the purposes, lock precision attachment apparatus is developed comprising an attachment apparatus, framework dental prosthesis adaptation connection apparatus designed for the outer surface form of the attachment apparatus, and connection apparatus to the ceramic crown having structure applicable to all teeth.

Within the context of the invention, the precision attachment apparatus are applied in-mouth by being fixated at the fixed teeth via crown restoration.

The meaning of crown (complete coating) is; the coating applied on a damaged tooth to recover it to its previous condition. The purpose of it is to protect the tooth and make it stronger and look better.
In order to achieve all of the above said advantages, which would be better understood from the below given detailed description, the invention is the precision attachment lock apparatus for use in in-mouth removable (partial-metal) dental prosthesis with extra coronal application in the field of dentistry and having female moulded framework dental prosthesis apparatus connected with the denture; and male moulded crown apparatus connected with the implant or natural (fixed) tooth, and it is characterized in that; it comprises:
   - attachment apparatus, which forms the centre of the precision attachment lock apparatus, made of polyacetal material, is connected between the framework dental prosthesis apparatus and the crown apparatus, and comprises support surface, housing having recession , protrusions, and bearing surface at its outer surface and performing locking due to its form;
   - framework dental prosthesis apparatus comprising attachment apparatus housing having recession and protrusions equivalent to the outer surface form of the attachment apparatus providing locking of the attachment apparatus; and
   - lock member, which is formed equivalently to the housing found on the attachment apparatus and fits in the housing, and which has concave surfaces on the crown apparatus providing locking-in of at least two adjacent teeth by performing locking of the framework dental prosthesis apparatus connected with the artificial teeth and the crown apparatus connected with the fixed teeth.
In a preferred application of the invention; it comprises protrusions at the lip ends extending to each other.
In another preferred application of the invention; at the attachment apparatus it comprises bearing surface having radiused surface in order to be configured circularly in accordance with the form of the lock component.
In another preferred application of the invention at the upper surface of the framework dental prosthesis apparatus, it comprises handling part having hooked form for ease of application due to the small size.
In another preferred application of the invention; at the framework dental prosthesis apparatus, it comprises 1^{st} lip and 2^{nd} lip.
In another preferred application of the invention; at the framework dental prosthesis apparatus, it comprises 1^{st} support end in plain form on the 1^{st} lip.
In another preferred application of the invention; at the framework dental prosthesis apparatus, it comprises 2^{nd} support end in radiused form on the 2^{nd} lip.
In another preferred application of the invention; it comprises stop member , which is on the 2^{nd} lip end outer surface, facilitating fixation of the framework dental prosthesis apparatus during modelling.
In another preferred application of the invention it comprises handling part, which is preferably hooked in order to provide ease of application for the crown apparatus, since its dimension is small at the lower surface.
In another preferred application of the invention; it comprises lock component having radiused surface.
In another preferred application of the invention; at the attachment apparatus, the lip ends lean against the concave surfaces which are near to the lock component on the crown apparatus .
In another preferred application of the invention at the framework dental prosthesis apparatus, the 1^{st} support end leans against recessed support end bearing found at the crown apparatus.
In another preferred application of the invention at the framework dental prosthesis apparatus, the 2^{nd} support end leans against inclined support end bearing.

The invention is the precision attachment lock apparatus for use in in-mouth removable (partial-metal) dental prosthesis with extra coronal application in the field of dentistry and having female moulded framework dental prosthesis apparatus connected with the denture; and male moulded crown apparatus connected with the implant or natural (fixed) tooth, and it is characterized in that; while activating the precision attachment lock apparatus, lips have an elastic flexion due to first space between recession and recession; second space between concave surface and protrusion and through this elastic expansion to prevent abrasions in the interior surfaces of framework dental prosthesis apparatus and crown apparatus .

The invention is the method of application of the precision attachment lock apparatus for use in in-mouth removable (partial-metal) dental prosthesis with extra coronal application in the field of dentistry and having female moulded framework dental prosthesis apparatus connected with the denture; and male moulded crown apparatus connected with the implant or natural (fixed) tooth, and it is characterized in that; it comprises the operation steps of:
- obtaining of the crown apparatus as a single piece via casting by fixation of it to the modelling wax of the tooth, on which ceramic crown is applied via modelling wax;
- providing contact of the framework dental prosthesis apparatus inside the tooth found in the adjacent artificial denture;
- locking of the attachment apparatus to the housing found at the framework dental prosthesis apparatus via recession and protrusions ;
- placement of the framework dental prosthesis apparatus to the artificial denture and at least one of the teeth found in this denture;
- placement of the housing of the attachment apparatus , which is completely locked at the framework dental prosthesis apparatus , at the crown apparatus with lock component which is in contact with the fixed tooth; and
- complete locking of the housing found at the attachment apparatus to the lock component found at the crown apparatus .

The structural and characteristic features of the invention and all advantages will be understood better in detailed descriptions with the figures given below and with reference to the figures, and therefore, the assessment should be made taking into account the figures and detailed explanations.

### BRIEF DESCRIPTION OF THE FIGURES

For better understanding of the embodiment of present invention and its advantages with its additional components, it should be evaluated together with below described figures.

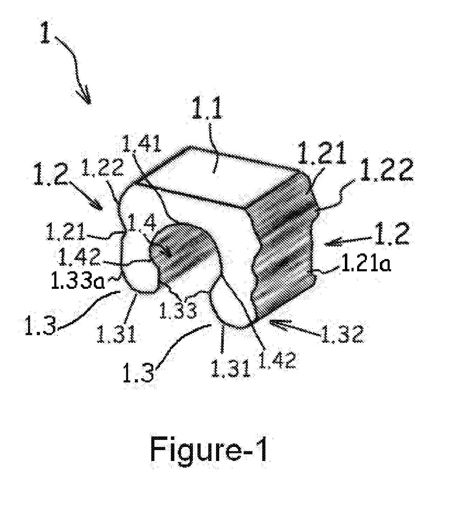

**Figure 1** is the perspective view of the attachment apparatus.

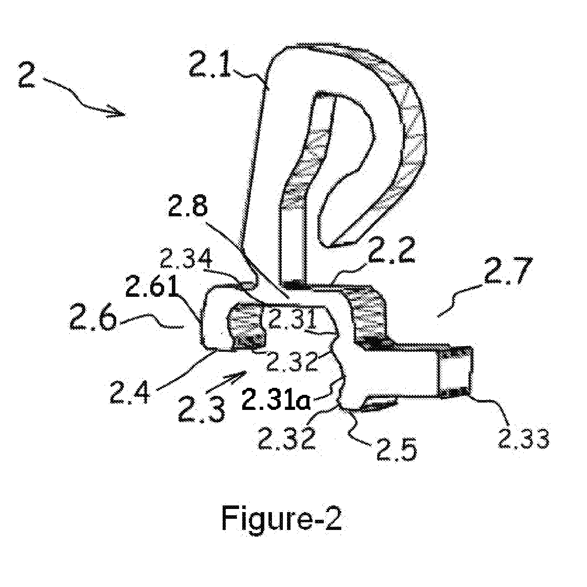

**Figure 2** is the perspective view of the framework dental prosthesis apparatus.

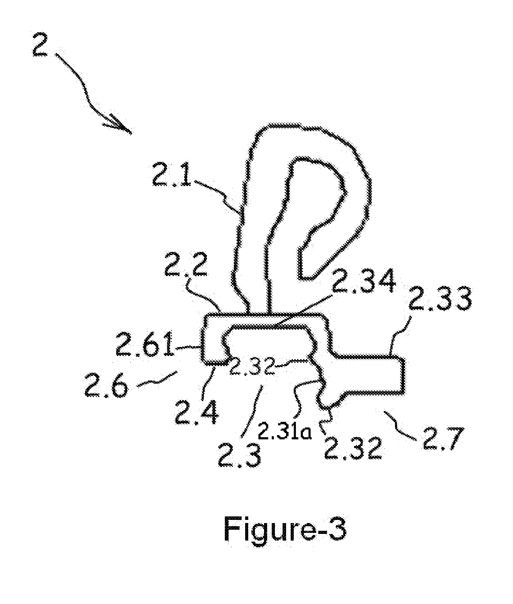

**Figure 3** is the two-dimensional side view of the framework dental prosthesis apparatus.

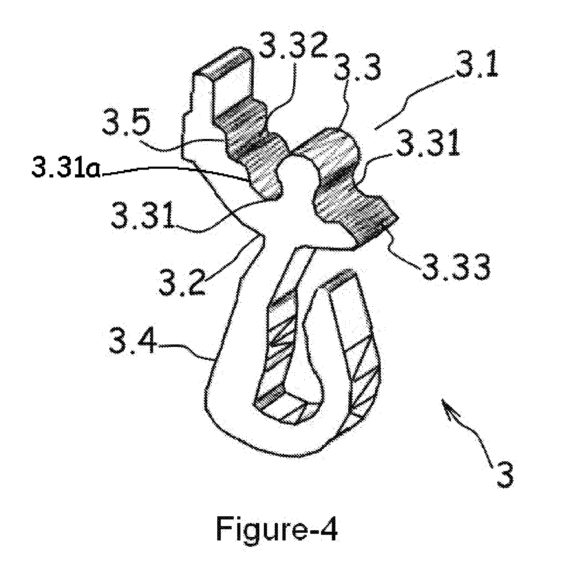

**Figure 4** is the bottom perspective view of the crown apparatus.

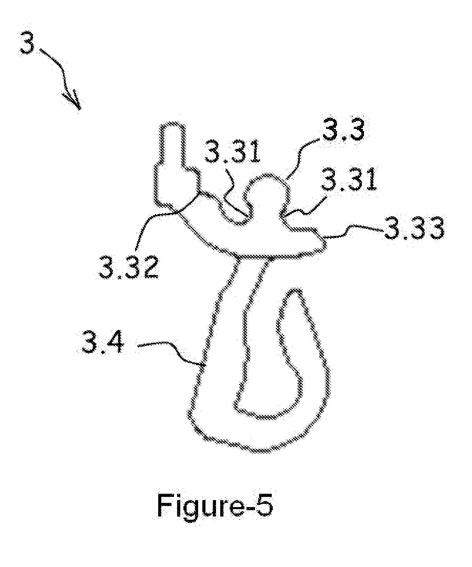

**Figure 5** is the two-dimensional side view of the crown apparatus.
**Figure 6** is the representative perspective view of the auxiliary apparatus.

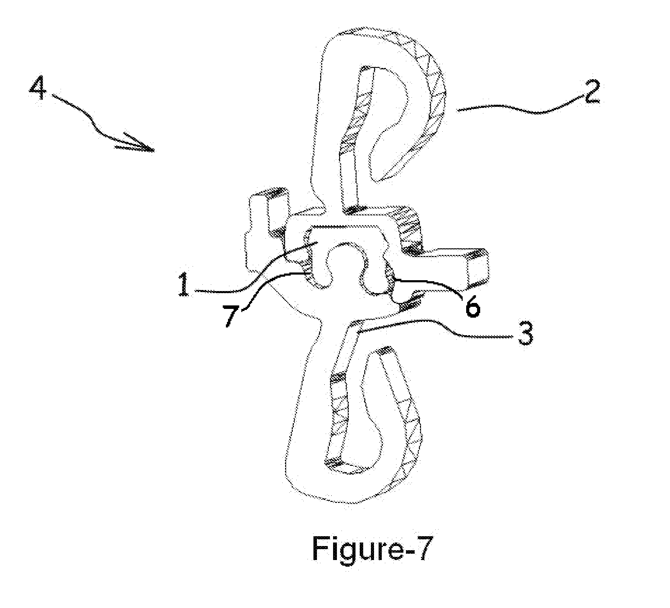

**Figure 7** is the representative mounted top view of the attachment apparatus, framework dental prosthesis apparatus, and crown apparatus.
**Figure 8** is the representative mounted perspective view of the precision attachment apparatus and protection apparatus.

### REFERENCE NUMBERS

- 1.: Attachment apparatus
1.1. Support surface
1.2. Side surfaces
1.21. Recession
1.21 a. Recession
1.22. Protrusion
1.3. Lip
1.31. Lip end
1.32. Lip End Side surface
1.33. Protrusion
1.33a. Protrusion
1.4. Housing
1.41. Bearing Surface
1.42. Recession
- 2.: Framework Dental Prosthesis Apparatus
2.1. Handling Part
2.2. Upper Surface
2.3. Attachment Apparatus Housing
2.31. Recession
2.31 a. Recession
2.32. Protrusion
2.33. Stop Member
2.34. Bearing Surface
2.4. 1^{st} Support End
2.5. 2^{nd} Support End
2.6. 1^{st} Lip
2.61. Contact Surface
2.7. 2^{nd} lip
2.8. Bridge Member
- 3.: Crown Apparatus
3.1. Upper Surface
3.2. Lower Surface
3.3. Lock Member
3.31. Concave surface
3.31a. Concave surface
3.32. Recessed Support End Bearing
3.33. Inclined Support End Bearing
3.4. Handling Part
3.5. Contact Surface
- 4.: Precision Attachment Lock Apparatus
- 5.: Auxiliary apparatus Set
5.1. Duplicate Apparatus
5.2. Protection Apparatus
5.3. Parallelometer Apparatus
5.4. Carrying Apparatus
- 6.: First Space
- 7.: Second Space

### DETAILED DESCRIPTION OF THE INVENTION

In this detailed description, the preferred embodiments of the precision attachment lock apparatus (4), which is the subject of the invention, will only be disclosed for better understanding of the subject, and will not form any limiting effect.

The precision attachment lock apparatus (4) is used in extra-coronally (out of the teeth) applied dental prosthesis in the field of dentistry. In the precision attachment lock apparatus (4), the framework dental prosthesis apparatus (2), which is shown in Figure-2 and Figure-3, and which is moulded in female mould in contact with the artificial denture; and the crown apparatus (3) having attachment apparatus (1), which is produced in female mould providing locking with its recessed (1.21) and protrusion (1.22) structure by being positioned in the housing (2.3) found at the framework dental prosthesis apparatus (2), and which is shown in Figure-1, and the lock component (3.3), which is produced in the male mould in contact with implant or natural tooth, and which is shown in Figure-4 and Figure-5. Crown apparatus (3) and framework dental prosthesis apparatus (2) are made of crystal and 10% anti-shock material. Moreover, the duplicate apparatus (5.1), protection apparatus (5.2), parallelometer apparatus (5.3), and carrying apparatus (5.4) found in the auxiliary apparatus set (5) are also made of crystal and 10% anti-shock material.

It is the attachment apparatus (1), which forms the centre of the precision attachment lock apparatus (4), and which conducts locking due to its polyacetal structure and form. A support surface (1.1) formed of a plain surface is found in order to provide complete fitting of the attachment apparatus (1) in the attachment apparatus housing (2.3) that is formed on the framework dental prosthesis apparatus (2). Lips (1.3) vertically extending downwards are found at the lower part of the support surface (1.1). Recessions (1.21) and protrusions (1.22) are found at the outer surfaces of the lips (1.3) and the support member side surface (1.2). Preferably, in the side surface (1.2), starting from the support surface (1.1), the alignment of recession (1.21), protrusion (1.22), and recession (1.21) is present. Between the two lips (1.3), a housing (1.4) is found providing embedding of the lock component (3.3) found in the crown apparatus (3). The ends (1.31) of the lips are formed in the form of protrusion (1.33) outwards from the side surface (1.32). At the housing (1.4), the radiused bearing surface (1.41) is found after the protrusion (1.33). The ends of the lips (1.31) are formed as radiused.

Bridge member (2.8) is found in the removable framework dental prosthesis apparatus (2). Since the size is small, handling part (2.1) is connected to the upper surface (2.2) of the bridge member (2.8) for ease of application. In the framework dental prosthesis apparatus (2), at the ends of the edges of the bridge member (2.8), the 1^{st} lip (2.6) and the 2^{nd} lip (2.7) are positioned vertically downwards at both ends. Between the lips (2.6, 2.7), housing (2.3) is found, which completely fits with the attachment apparatus (1), and has the same form with the outer surface of the attachment apparatus (1). Attachment apparatus (1) is completely locked to the housing (2.3). The 1^{st} lip (2.6) is formed a little shorter than the 2^{nd} lip (2.7). The lip end side surface is formed in the form of outwards protrusion (2.32). Via the protrusions (2.32), attachment apparatus (1) completely locks and fits in the housing (2.3) found at the framework dental prosthesis apparatus (2). The 1^{st} lip end is in plain form, while the 2^{nd} lip end is in radiused form. Stop member (2.33) is horizontally positioned at the outer surface of the longer 2^{nd} lip (2.7) in order to facilitate fixation of the apparatus (2) during modelling. The 1^{st} and the 2^{nd} support ends (2.4, 2.5) are found at the ends of the lips. The 1^{st} support end (2.4) is formed in plain form, while the 2^{nd} end (2.5) is formed in radiused form.

Preferably crown apparatus (3) is used for application at natural teeth or implant teeth. Since the size is small, handling part (3.4) is connected to the lower surface (3.2) of the crown apparatus (3) for ease of application just like in the framework dental prosthesis apparatus (2). At the crown apparatus upper surface (3.1), lock member (3.3) is formed, which completely fits and engages in the housing (1.4) found at the attachment apparatus (1). Concave surfaces (3.31) are formed at the end part of the lock component (3.3). Moreover, protrusion formed towards the side and then the recessed support end bearing (3.32) continuing with recession is found after one of the concaves surface (3.31). The 1^{st} support end (2.4) found at the framework dental prosthesis apparatus (2) fits into this bearing (3.32). The contact surface (2.61) that is found at the side surface of the 1^{st} lip (2.6) found at the 1^{st} support end (2.4) and the framework dental prosthesis apparatus (2), completely matches up with the contact surface (3.5) found at the crown apparatus (3). At the support end bearing (3.33) formed with protrusion and curve after the other concave surface (3.31), the support end (2.5) is found, at which the end of the 2^{nd} lip of the framework dental prosthesis apparatus (2) fits in.

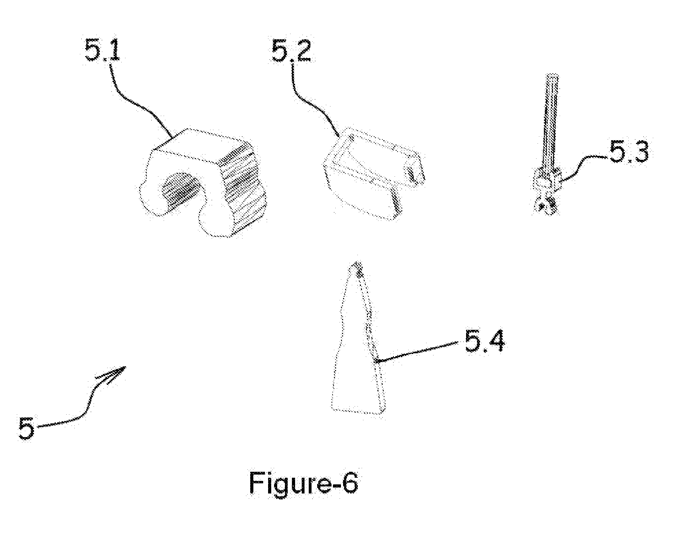

The pieces forming the auxiliary apparatus set (5) shown in Figure 6 are described below;

After fixation of the crown apparatus (3) at the fixed tooth, duplicate apparatus (5.1) is used in order to provide error-free transfer of the framework dental prosthesis apparatus (2) to the duplicate material. It is the protection apparatus (5.2), which completely closes the external walls of the framework dental prosthesis apparatus (2) and thus prevents change of its inner form through being filled with the duplicate material. Parallelometer apparatus (5.3) is used to provide parallelism between the products used during fixation of the crown apparatus (3) to the fixed tooth and in case of using more than one product in the same case. Carrying apparatus (5.4) is used for fixation of the attachment apparatus (1) to the framework dentak prosthesis apparatus (2).

Preferably, the crown apparatus (3) and the framework dental prosthesis apparatus (2) are made of crystal material and the attachment apparatus (1) is made of polyacetal material.

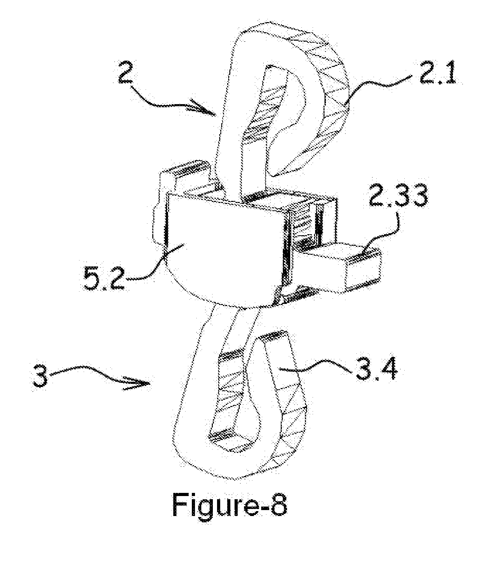

Figure 8 is the representative mounted perspective view of the precision attachment lock apparatus (4) and the protection apparatus (5.2).

The way of application of the precision attachment lock apparatus (4) is as follows;
- obtaining of the crown apparatus (3) as a single piece via casting by fixation of it to the modelling wax of the tooth, on which ceramic crown is applied via modelling wax; ( the handling part (3.4) is removed from here by cutting)
- contact of the framework dental prosthesis apparatus (2) is provided inside the tooth found in the adjacent artificial denture;
- after fixation of the crown apparatus (3) to the fixed tooth, duplicate apparatus (5.1) is used, which conducts transfer of the framework dentalprosthesis apparatus (2) to the duplicate material in a error-free way;
- complete size (mould) of the attachment apparatus (1) is taken via the duplicate apparatus (5.1);
- the attachment apparatus (1) is locked at the housing (2.3) found at the framework dental prosthesis apparatus (2);

(The support surface (1.1) found at the attachment apparatus (1) matches up with the bearing surface (2.34) found at the framework dental prosthesis apparatus (2); since the protrusion (1.22) found at the attachment apparatus (1) side surface has the form of the recession (2.31) found at the framework apparatus, it fits in the recession (2.31); and the protrusions (2.32) found at the 1^{st} and 2^{nd} lip end (2.6, 2.7) at the framework dental prosthesis apparatus (2) at the side facing the housing (2.3) fit in the recession (1.42) of the housing (1.4) found at the attachment apparatus (1). In this way, complete locking of the attachment apparatus (1) and the framework dental prosthesis apparatus (2) is ensured.)
- the artificial denture and the framework dental prosthesis apparatus (2) placed on at least one of the teeth found in this denture and the housing (1.4) of the attachment apparatus (1) completely locked at the framework dental prosthesis apparatus (2) are brought to be positioned on the crown apparatus (3) with lock component (3.3) in contact with the fixed tooth in a way that they face downwards.
- the housing (1.4) found at the attachment apparatus (1) is completely locked at the lock component (3.3) found at the crown apparatus (3) with a clicking sound.

In this way, as it is also seen in Figure-7, the 1^{st} support end (2.4) found at the framework dental prosthesis apparatus (2) supports the recessed support end bearing (3.32) found at the crown apparatus (3), while the 2^{nd} support end (2.5) supports the inclined support end bearing (3.32). And the protrusions (1.33) of the lip ends (1.31) found at the attachment apparatus (1) are placed at the concave surface (3.31) surfaces formed at the lock component (3.3) formed as matching with the attachment apparatus housing (1.4), and the radiused lock component (3.3) contacts with and completely fits in the bearing surface (1.41) found at the housing of the attachment apparatus (1).

The way of activation of the precision attachment lock apparatus (4) is as follows;

While activating the precision attachment lock apparatus (4), lips (1.3) have an elastic expansion due to first space (6) between recession (2.31a) and recession (1.21a); second space between concave surface (3.31 a) and protrusion (1.33a) and through this elastic expansion to prevent abrasions in the interior surfaces of framework dental prosthesis apparatus (2) and crown apparatus (3).

## Claims

1. The invention is the precision attachment lock apparatus for use in in-mouth removable (partial-metal) dental prosthesis with extra coronal application in the field of dentistry and having female moulded framework dental prosthesis apparatus (2) connected with the denture; and male moulded crown apparatus (3) connected with the implant or natural (fixed) tooth, and it is **characterized in that**; it comprises:
• attachment apparatus (1), which forms the centre of the precision attachment lock apparatus (4), made of polyacetal material, is connected between the framework dental prosthesis apparatus (2) and the crown apparatus (3), and comprises support surface (1.1), housing (1.4) having recession (1.21), protrusions (1.22), and bearing surface (1.41) at its outer surface and performing locking due to its form;
• framework dental prosthesis apparatus (2) comprising attachment apparatus housing (2.3) having recession (2.31) and protrusions (2.32) equivalent to the outer surface form of the attachment apparatus (1) providing locking of the attachment apparatus (1); and
• lock member (3.3), which is formed equivalently to the housing (1.4) found on the attachment apparatus (1) and fits in the housing (1.4), and which has concave surfaces (3.31) on the crown apparatus (3) providing locking-in of at least two adjacent teeth by performing locking of the framework dental prosthesis apparatus (2) connected with the artificial teeth and the crown apparatus (3) connected with the fixed teeth.

2. A precision attachment lock apparatus according to Claim 1 , and it is **characterized in that**; it comprises protrusions (1.33) at the lip ends extending to each other.

3. A precision attachment lock apparatus according to Claims 1 to 2 and it is **characterized in that**; at the attachment apparatus (1) it comprises bearing surface (1.41) having radiused surface in order to be configured circularly in accordance with the form of the lock component (3.3).

4. A precision attachment lock apparatus according to any one of the above claims,and it is **characterized in that**; at the upper surface (2.2) of the framework dental prosthesis apparatus (2), it comprises handling part (2.1) having hooked form for ease of application due to the small size.

5. A precision attachment lock apparatus according to any one of the above claims,and it is **characterized in that**; at the framework dental prosthesis apparatus (2), it comprises 1^{st} lip and 2^{nd} lip (2.6, 2.7).

6. A precision attachment lock apparatus according to any one of the above claims, and it is **characterized in that**; at the framework dental prosthesis apparatus (2), it comprises 1^{st} support end (2.4) in plain form on the 1^{st} lip (2.6).

7. A precision attachment lock apparatus according to any one of the above claims, and it is **characterized in that**; at the framework dental prosthesis apparatus (2), it comprises 2^{nd} support end (2.5) in radiused form on the 2^{nd} lip (2.7).

8. A precision attachment lock apparatus according to any one of the above claims,, and it is **characterized in that**; it comprises stop member (2.33), which is on the 2^{nd} lip end (2.7) outer surface, facilitating fixation of the framework dental prosthesis apparatus (2) during modelling.

9. A precision attachment lock apparatus according to any one of the above claims, and it is **characterized in that**; it comprises handling part (3.4), which is preferably hooked in order to provide ease of application for the crown apparatus (3), since its dimension is small at the lower surface (3.2).

10. A precision attachment lock apparatus according to Claims 1 to 9, and it is **characterized in that**; it comprises lock component (3.3) having radiused surface.

11. A precision attachment lock apparatus according to Claim 1 to 10, and it is **characterized in that**; at the attachment apparatus (1), the lip ends (1.31) lean against the concave surfaces (3.31) which are near to the lock component (3.3) on the crown apparatus (3).

12. A precision attachment lock apparatus according to Claim 1 to 11, and it is **characterized in that**; at the framework dental prosthesis apparatus (2), the 1^{st} support end (2.4) leans against recessed support end bearing (3.32) found at the crown apparatus (3).

13. A precision attachment lock apparatus according to Claim 1 to 12, and it is **characterized in that**; at the framework dental prosthesis apparatus (2), the 2^{nd} support end (2.5) leans against inclined support end bearing (3.33).

14. The invention is the precision attachment lock apparatus for use in in-mouth removable (partial-metal) dental prosthesis with extra coronal application in the field of dentistry and having female moulded framework dental prosthesis apparatus (2) connected with the denture; and male moulded crown apparatus (3) connected with the implant or natural (fixed) tooth, and it is **characterized in that**; while activating the precision attachment lock apparatus (4), lips (1.3) have an elastic flexion due to first space (6) between recession (2.31 a) and recession (1.21 a); second space between concave surface (3.31 a) and protrusion (1.33a) and through this elastic expansion to prevent abrasions in the interior surfaces of framework dental prosthesis apparatus (2) and crown apparatus (3).

15. The invention is the method of application of the precision attachment lock apparatus for use in in-mouth removable (partial-metal) dental prosthesis with extra coronal application in the field of dentistry and having female moulded framework dental prosthesis apparatus (2) connected with the denture; and male moulded crown apparatus (3) connected with the implant or natural (fixed) tooth, and it is **characterized in that**; it comprises the operation steps of:
• obtaining of the crown apparatus (3) as a single piece via casting by fixation of it to the modelling wax of the tooth, on which ceramic crown is applied via modelling wax;
• providing contact of the framework dental prosthesis apparatus (2) inside the tooth found in the adjacent artificial denture;
• locking of the attachment apparatus (1) to the housing (2.3) found at the framework dental prosthesis apparatus (2) via recession (1.21) and protrusions (1.22);
• placement of the framework dental prosthesis apparatus (2) to the artificial denture and at least one of the teeth found in this denture;
• placement of the housing (1.4) of the attachment apparatus (1), which is completely locked at the framework dental prosthesis apparatus (2), at the crown apparatus (3) with lock component (3.3) which is in contact with the fixed tooth; and
• complete locking of the housing (1.4) found at the attachment apparatus (1) to the lock component (3.3) found at the crown apparatus (3).
